**Europäisches Patentamt**

**European Patent Office**

**Office européen des brevets**

(19)

(11) Veröffentlichungsnummer: **0 087 828**

**A1**

(12) # EUROPÄISCHE PATENTANMELDUNG

(21) Anmeldenummer: **83200149.9**

(22) Anmeldetag: **27.01.83**

(51) Int. Cl.³: **B 29 D 23/03**

(30) Priorität: **15.02.82 CH 919/82**

(43) Veröffentlichungstag der Anmeldung:
**07.09.83 Patentblatt 83/36**

(84) Benannte Vertragsstaaten:
**DE FR GB IT**

(71) Anmelder: **FLEXTAINER AG**
**Mainaustrasse 8**
**CH-8008 Zürich(CH)**

(72) Erfinder: **Erb, René**
**4, Rue du Docteur-Schneider**
**F-67320 Drulingen(FR)**

(74) Vertreter: **Ritscher, Thomas, Dr.**
**RITSCHER & SEIFERT Auf der Mauer 4**
**CH-8001 Zürich(CH)**

(54) **Verfahren zur Herstellung von Kunststoffbehältern.**

(57) Zur Herstellung von glatt einstülpbaren, annähernd kubischen Kunststoffbehältern aus zwei annähernd symmetrischen, durch eine umlaufende Naht in einer Diagonalebene des Behälters miteinander verbundenen Teilen und mit einer annähernd im Bereich der Naht ligenden Stülplinie durch Verschweissen von zwei mindestens vorgeformten Behälterhälften in der die Lage der Naht bestimmenden Diagonalebene werden die beiden Behälterhälften gleichzeitig aus einem Extrudatschlauch (10) geformt, der in warmplastischem Zustand zwischen die Formteile (12, 14) eines geöffneten Hohlformwerkzeuges (11) geführt, mechanisch über die von den Hohlraumhälften (121, 141) in der Formschlussebene (E) der beiden Formteile (12, 14) umgrenzte Fläche (B¹, H¹) hinweg gespreizt wird; durch Aufblasen wird der gespreizte Extrudatschlauch mindestens teilweise und vorzugsweise überwiegend in die Hohlraumhälften (121, 141) der Formteile (12, 14) des noch offenen Hohlformwerkzeuges (11) gedrückt; erst dann wird das Hohlformwerkzeug (11) zum Verschweissen der Behälterhälften unter Bildung einer in der Formschlussebene ununterbrochen umlaufenden Naht geschlossen.

Fig.1

Verfahren zur Herstellung von Kunststoffbehältern

In der Verpackungstechnik, insbesondere für die Verpackung von flüssigem Gut, sind kollapsible Kunststoffbehälter bekannt, die in leerem Zustand um eine Formsymmetrielinie auf sich selbst rückfaltbar sind, d. h. halbseitig glatt in sich selbst eingestülpt werden können.

Dies hat den Vorteil, dass eine Mehrzahl solcher Behälter nach Art von ineinander passenden Schalen relativ dicht gestapelt werden kann, so dass für Lagerung und Transport des Leergutes vergleichsweise sehr wenig Raum benötigt wird. Kollapsible Behälter dieser Art werden im folgenden als "glatt einstülpbare Kunststoffbehälter" bezeichnet.

Die z. B. aus der US-PS 2'950'029 bekannten glatt einstülpbaren Behälter bilden in gefülltem Zustand kubische, d. h. quader- oder annähernd würfelförmige Körper und bieten zusätzlich zur dichten Stapelbarkeit den Vorteil einer maximalen Packungsdichte in gefülltem Zustand.

Für die Herstellung von glatt einstülpbaren Behältern ist die Wandstärkenhomogenität im Formnahtbereich wesentlich, weil dieser im allgemeinen auch die Faltlinie beim Einstülpen definiert, z. B. in Form einer parallel zur Formnaht und nahe an dieser verlaufenden Rille; dieser Faltlinien- bzw. Formnahtbereich muss gleichmässig sein und darf weder durch Oeffnungen noch durch Querwülste unterbrochen sein, wenn das glatte Einstülpen der einen Behälterhälfte in die andere Hälfte gewährleistet sein soll.

Die bekannten glatt einstülpbaren Kunststoffbehälter wurden bisher allgemein nach dem z. B. in FR-PS 1'340'312 beschriebenen Vakuumformverfahren hergestellt; dabei werden zwei separate, mit parallelen Breitschlitzdüsen erzeugte Bänder oder Folien verwendet, um aus jeweils einer Folie durch Einsaugen in ein Formwerkzeug je eine Hälfte des Behälters auszuformen und diese vorgeformten Behälterhälften dann durch Zusammenführen der Formwerkzeuge miteinander zu verschweissen.

Wie in der DE-PS 1'178'580 erläutert, wird in der Thermoplastverarbeitung ein schlauchförmiges Extrudat als Zwischenprodukt gegenüber paarweise extrudierten Bändern oder Folien an sich bevorzugt, weil das Extrudieren aus einer einzigen Ringschlitzdüse wesentlich einfacher kontrollierbar ist, als das Extrudieren von zwei Folien aus Breitschlitzdüsen.

Trotzdem ist bisher aber kein Verfahren zur Herstellung von glatt einstülpbaren, annähernd kubischen Kunststoffbehältern bekannt geworden, welches die Herstellung solcher Behälter aus einem Extrudatschlauch ermöglicht. Allgemein werden nämlich Blasformverfahren mit schlauchförmigem Extrudat gemäss der DE-PS 1'178'580 zur Herstellung von relativ grossen Behältern als problematisch angesehen, weswegen gemäss diesem Stand der Technik beispielsweise zur Herstellung von flachliegenden Hohlkörpern der extrudierte Schlauch zunächst mit Hilfe von zwei Spreizstäben vorgedehnt und in diesem Zustand zwischen die Formhälften oder -nester des Blasformwerkzeuges gebracht wird. Das Blasformen erfolgt dabei erst in der geschlossenen Form durch den Blasdorn, dessen Lage in der Formschlussebene auch die Lage der Behälteröffnung bestimmt.

Zur Herstellung von glatt einstülpbaren und relativ grossvolumigen Behältern ist das in der DE-PS 1'178'580, aber auch das ebenfalls mit vorgängiger Spreizung des Extrudatschlauches arbeitende Blasverfahren gemäss GB-PS 1'226'321 nicht geeignet, weil das eigentliche Blasformen erst nach dem Schliessen des Hohlformwerkzeuges erfolgt, und zwar durch den Blasdorn, d. h. eine Düse, die sich zwischen die Schliessflächen des Werkzeuges hindurch in den Formhohlraum hinein erstreckt. Dadurch entsteht im Bereich der umlaufenden Naht eine Ungleichmässigkeit, nämlich eine Unterbrechung der Naht in der Formschlussebene, meist in Form der verschliessbaren Oeffnung des Behälters; die Bildung der für das glatte Einstülpen des fertigen Behälters erforderlichen Stülplinie im Bereich der Naht wird dadurch verunmöglicht.

Aufgabe der Erfindung ist ein Verfahren zur Herstellung von glatt einstülpbaren, annähernd kubischen Kunststoffbehältern von erheblicher Grösse, z. B. mit 10-40 Liter Fassungsvermögen, aus zwei annähernd symmetrischen, durch eine umlaufende Naht in einer Diagonalebene des Behälters miteinander verbundenen Teilen und mit einer annähernd im Bereich der Naht liegenden Stülplinie durch Verschweissen von zwei vorgeformten Behälterhälften in der die Lage der Naht bestimmenden Diagonalebene, bei welchem Verfahren die beiden Behälterhälften nicht aus parallelen Folien, d. h. mit Breitschlitzextrudern, sondern gemeinsam aus einem einzigen Extrudatschlauch, d.h. mit Hilfe einer Ringschlitzdüse, hergestellt werden können.

Es wurde gefunden, dass das zur Herstellung von derartigen glatt einstülpbaren kubischen Behältern aus den dargelegten Gründen nicht geeignete bekannte Blasformverfahren mit mechanischer Spreizung des Extrudatschlauches dadurch zur Lösung der erfindungsgemässen Aufgabe modifiziert werden kann, dass man den gespreizten Schlauch durch Aufblasen mindestens teilweise und vorzugsweise überwiegend in die Hohlraumhälften der Formteile des noch offenen Formwerkzeuges drückt und dieses erst nach dem Aufblasen des Extrudatschlauches zum Verschweissen der Behälterhälften unter Bildung einer in der Formschlussebene ununterbrochen umlaufenden Naht schliesst.

Zum Einblasen des mechanisch gespreizten Extrudatschlauches in die beiden Hälften des offenen Werkzeuges können Quetschleisten oder analog wirkende Mittel verwendet und die Blasluft durch mindestens eine in den abgequetschten Extrudatschlauch sich erstreckende Blasdüse eingeführt werden.

Vorzugsweise werden zur mechanischen Spreizung des Extrudatschlauches zwei gekühlte oder selbst als Blasdüsen dienende, annähernd senkrechte, parallele und gegeneinander bewegliche Spreizstäbe im Innern des Extrudatschlauches verwendet, deren Länge allgemein grösser ist, als die Höhenabmessung der Schliessfläche der Formteile. Die Blasluft kann ausschliesslich über die Spreizstäbe oder über eine zusätzliche Düse eingeführt werden.

Wenn mindestens einer der Spreizstäbe zum Einblasen von Pressluft in den Extrudatschlauch dient, ist er z. B. als endseitig geschlossener Hohlkörper ausgebildet, mit einer Pressluftleitung verbunden und mit entsprechenden Mantelöffnungen versehen. Kühlbare Spreizstäbe können als Doppelrohre ausgebildet und mit einem entsprechenden Kühlmittelanschluss versehen sein.

Wenn gewünscht, kann Luft zusätzlich nach dem bekannten Einschussverfahren mit seitlich in die geschlossene Hohlform eingeführten Hohlnadeln eingeblasen und/oder mit Saugöffnungen

- 5 -

0087828

und Unterdruck aus dem Raum zwischen dem Extrudatschlauch und der Formwand abgesaugt werden.

Als Werkstoffe sind die für die Herstellung von Kunststoffbehältern üblichen thermoplastisch verarbeitbaren Werkstoffe, wie Polyalkylene, z. B. Polyethylen, insbesondere HD-PE, geeignet, und die Extrusionsbedingungen, insbesondere die Wahl der Temperatur des Extrudatschlauches, bei welcher dieser warmplastisch ist, hängen in bekannter Weise von der Art der Polymermasse ab.

Die Formhälften können in üblicher Weise gekühlt werden und mit Einsätzen, z. B. zum Anformen von nicht in der Naht- bzw. Formschlussebene liegenden Behälteröffnungen versehen werden.

Die Steuerung der Arbeitstakte kann in an sich bekannter Weise vorzugsweise automatisch erfolgen; ferner kann die Dicke des Extrudatschlauches in an sich bekannter Weise durch Steuerung des Oeffnungsgrades der Ringschlitzdüse den Materialerfordernissen der Formen angepasst werden.

Zweckmässig werden für eine Blasformanlage mehrere Spreizstabeinrichtungen verwendet, die beispielsweise karussellartig angeordnet sind, so dass jeweils eine Spreizeinrichtung aus dem Karussell in Arbeitsstellung, d. h. zwischen die geöffneten Formteile des Hohlformwerkzeuges eingefahren werden kann, bevor der Extrudatschlauch ausgepresst wird; die Spreizstäbe befinden sich dabei in der ersten oder Ausgangsstellung, d.h. ihr Abstand ist geringer als die lichte Weite des Extrudatschlauches. Der ausgepresste Extrudatschlauch wird dann gespreizt, indem die Spreizstäbe in die zweite oder Spreizstellung bewegt werden, dann abgeklemmt und in die Hälften der offenen Form hineingeblasen; beim Schliessen der Form liegen die Spreizstäbe der in Arbeitsstellung befindlichen Spreizeinrichtung zweckmässig in entsprechenden Ausnehmungen des Hohlformwerkzeuges, z. B. in Randrillen der beiden Formhälften.

Nach dem Ausformen des Behälters wird die Spreizeinrichtung zusammen mit dem Behälter und den noch anhängenden Formgratteilen aus der Arbeitsstellung ausgefahren und durch eine Folge von Nachbearbeitungsstationen des Karussells geführt, bis die Spreizeinrichtung alle Karussellstationen durchlaufen hat und erneut in Arbeitsstellung gelangt.

Die beigeschlossenen Zeichnungen dienen der weiteren Erläuterung der Erfindung. Es zeigen:

Fig. 1    eine schematische, teilweise geschnittene Seitenansicht eines zweiteiligen Hohlformwerkzeuges zum Blasformen von Extrudatschlauch, der aus einem Ringschlitzextruder ausgepresst ist,

Fig. 2A und 2B  die Draufsicht auf die in Fig. 1 dargestellte Spreizeinrichtung vor bzw. nach dem Spannen des Extrudatschlauches durch Spreizen,

Fig. 3    das Hohlformwerkzeug von Fig. 1 während des Aufblasens des Extrudatschlauches nach dem mechanischen Spannen durch Spreizen,

Fig. 4    das Hohlformwerkzeug von Fig. 1 während des Verschweissens der Behälterhälften und

Fig. 5    die halbschematische Draufsicht auf eine Einrichtung zum mechanischen Spannen des Extrudatschlauches durch Spreizen.

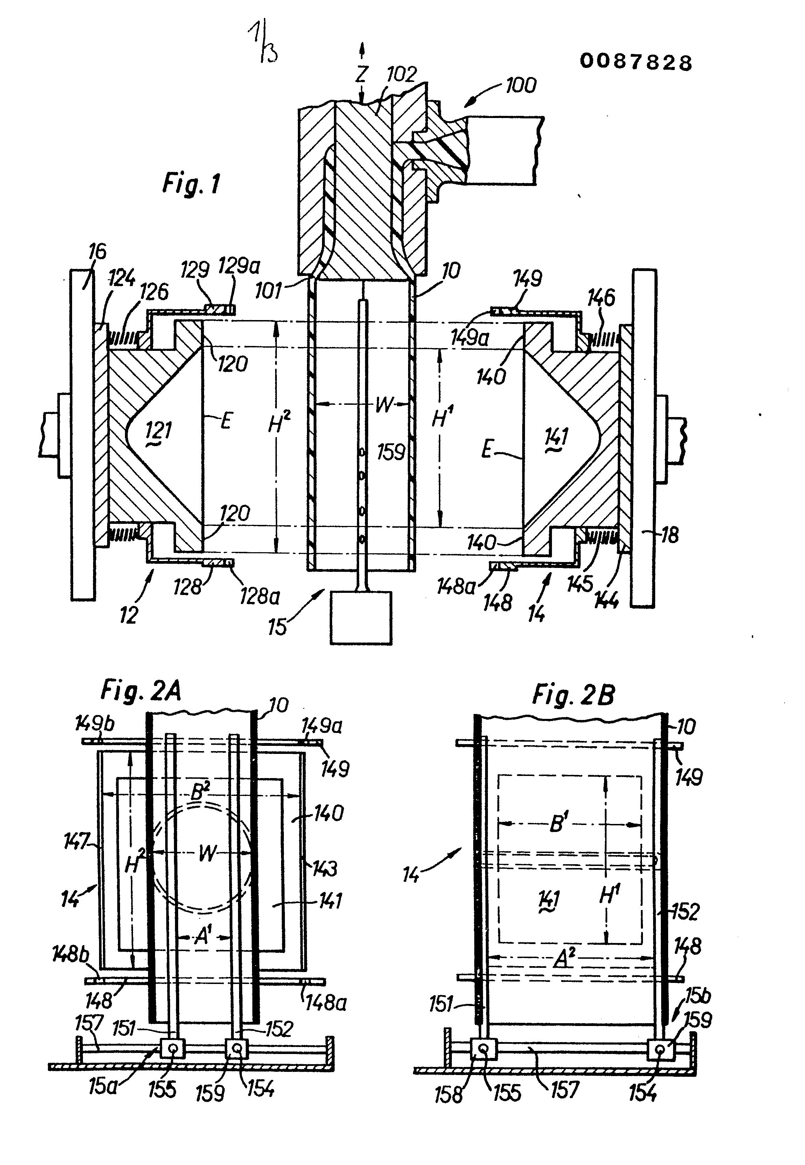

Gemäss Fig. 1 wird der Extrudatschlauch 10 aus dem Kopf 100 einer nicht dargestellten Schneckenpresse durch eine Ringschlitzdüse 101 ausgepresst, die durch Bewegung des Ringschlitzdüsenkernes 102 in Richtung des Doppelpfeiles Z geöffnet bzw. geschlossen oder in Zwischenstellungen gesteuert werden kann.

Beim Oeffnen der Ringschlitzdüse 101 wird der Extrudatschlauch 10 ausgepresst, bis er etwa die in Fig. 1 dargestellte Stellung hat; dann wird die Ringschlitzdüse 101 geschlossen.

Vor Beginn des Auspressens des Extrudatschlauches ist die Spreizeinrichtung 15 in Arbeitsstellung, d. h. zwischen die beiden Formteile 12, 14 des geöffneten Hohlformwerkzeuges 11, gebracht worden.

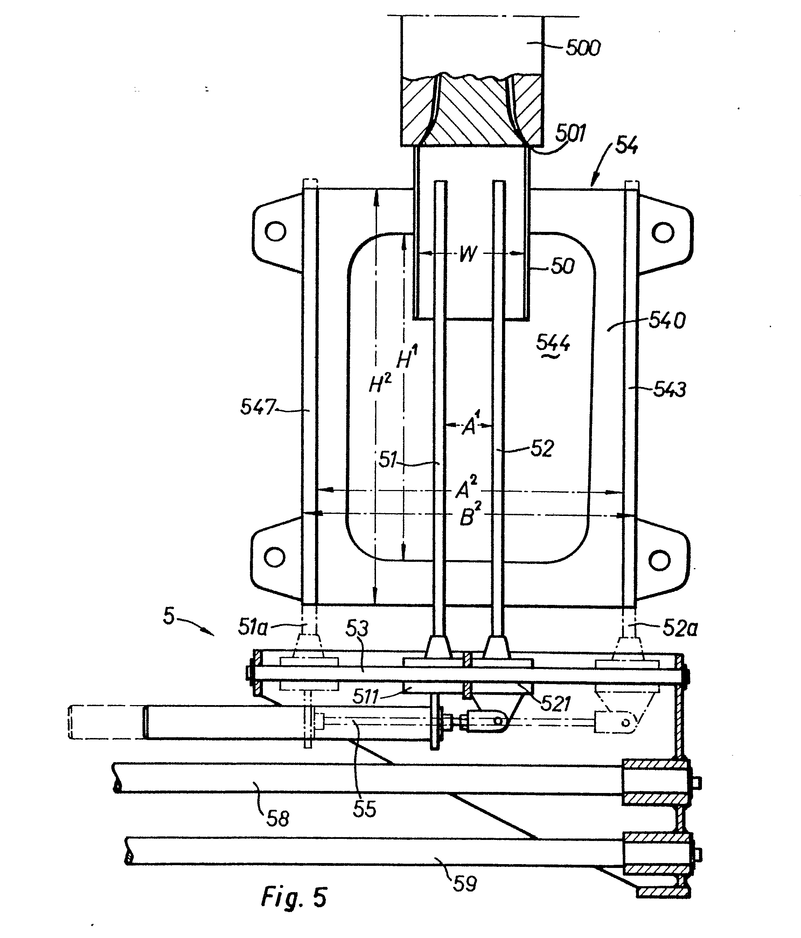

In den Fig. 2A, 2B ist das Schema der Spreizeinrichtung 15 in Draufsicht, d. h. vor dem Formteil 14, gezeigt. Die beiden annähernd senkrechten parallelen Spreizstäbe 151, 152 sind mit Gleitschuhen 158, 159 auf einer Schiene 157 gegeneinander beweglich; zur Bewegung kann ein (in Fig. 2A, 2B nicht dargestellter) Antrieb, z. B. ein pneumatischer oder hydraulischer Zylinder (Fig. 5) verwendet werden.

Während des Auspressens des Extrudatschlauches 10 aus der Ringschlitzdüse 101 befinden sich die Spreizstäbe 151, 152 in der in Fig. 2A dargestellten Position (erste Stellung), bei welcher der Abstand $A^1$ zwischen den Spreizstäben 151, 152 kleiner ist, als die lichte Weite W des (in Fig. 2A in durchbrochenen Linien im Querschnitt angedeuteten) Extrudatschlauches 10. Nun werden die Spreizstäbe 151, 152 auf der Schiene 157 bis zum Abstand $A^2$ voneinander entfernt. Dadurch wird der ursprünglich annähernd runde Extrudatschlauch 10 flachgelegt (wie in Fig. 2A in durchbrochenen Linien im Querschnitt angedeutet) und über die von der Hohlraumhälfte 141 in der Formschlussebene E (Fig. 1) des Formteiles 14 und dementsprechend auch über die von der Hohlraumhälfte 121 des anderen Formteiles 12 in der Ebene E umgrenzte Fläche hinweg gespreizt. Diese Fläche hat eine Höhenabmessung $H^1$ und eine Breitenabmessung $B^1$; um die erfindungsgemäss wesentliche Spreizung des Extrudatschlauches 10 über diese Fläche hinweg zu gewährleisten, muss die Länge der Spreizstäbe 151, 152 grösser als $H^1$ und der Abstand $A^2$ in der zweiten Stellung (Fig. 2B) grösser als $B^1$ sein.

Vorzugsweise wird der Extrudatschlauch 10 beim erfindungsgemässen Verfahren mechanisch soweit gespannt bzw. gespreizt, dass er sich praktisch über die gesamten Schliessflächen 120, 140 der beiden Formteile 12, 14 hinweg erstreckt, d. h. $A^2$ (Fig. 2B) mindestens annähernd ebensogross ist, wie die Breitenabmessung $B^2$ der Formflächen 120, 140, und die Länge der Spreizstäbe 151, 152 mindestens ebensogross ist wie und vorzugsweise grösser als die Höhenabmessung $H^2$ der Formteile.

Nach dem Spreizen wird der Extrudatschlauch 10 von den Leisten 128, 129; 148, 149 eingeklemmt; solche Klemmleisten sind an sich bekannt und können wie in Fig. 1 angedeutet mit Hilfe von Federungen 125, 126; 145, 146 auf den Trägerplatten 124, 144 der Formteile 12, 14 abgestützt sein, so dass sie bei Beginn des Schliessvorganges des Hohlformwerkzeuges 11, d. h. beim Gegeneinanderführen der Platten 16, 18 einer (nicht dargestellten) Presse, den Extrudatschlauch oberhalb und unterhalb der Formschlussflächen 120, 140 zusammenklemmen.

Die Klemmleisten 128, 129; 148, 149 sind jeweils mit Ausnehmungen 128a, b; 129a, b; 148a, b und 149a, b versehen, in welchen die Spreizstäbe in der zweiten Stellung (Fig. 2B) liegen. Gegebenenfalls kann eine zusätzliche (nicht dargestellte) Ausnehmung für eine zusätzliche, zwischen den Spreizstäben angeordnete kurze Blasdüse (nicht dargestellt) vorgesehen sein. Beispielsweise ist mindestens ein Spreizstab 151, 152 mit mindestens einer Blasdüse 159 (Fig. 1) versehen, die über einen (nicht dargestellten) Kanal im Innern des Spreizstabes zu einem Anschluss 154, 155 (Fig. 2B) für eine (nicht dargestellte) Druckgas- bzw. Pressluftleitung führt. Die Randausnehmungen 143, 147 dienen zur Aufnahme der Spreizstäbe.

Im allgemeinen ist beim erfindungsgemässen Verfahren das Verhältnis zwischen der lichten Weite W des Extrudatschlauches und dem Abstand $A^2$ zwischen den Spreizstäben der Spreizeinrichtung bestimmt durch die Beziehung

$$A^2 \geqslant \frac{W \cdot \widetilde{\Pi}}{2}$$

und es entspricht einer bevorzugten Ausführungsform des erfindungsgemässen Verfahrens, dass $A^2$ grösser als $\frac{W \cdot \widetilde{\Pi}}{2}$ ist, z. B. um 3-30 %, vorzugsweise 5-20 %, da eine gewisse Dehnung des Extrudatschlauches beim Spreizen die Homogenität des gespreizten Materials zu erhöhen gestattet, was zur Gleichmässigkeit der Wandstärke im Formnahtbereich beitragen kann. Im allgemeinen ist das Verhältnis von Wandstärke zu Kantenlänge des fertigen kubischen Behälters kleiner als 1:100 und beträgt z. B. 1:200 bis 1:400.

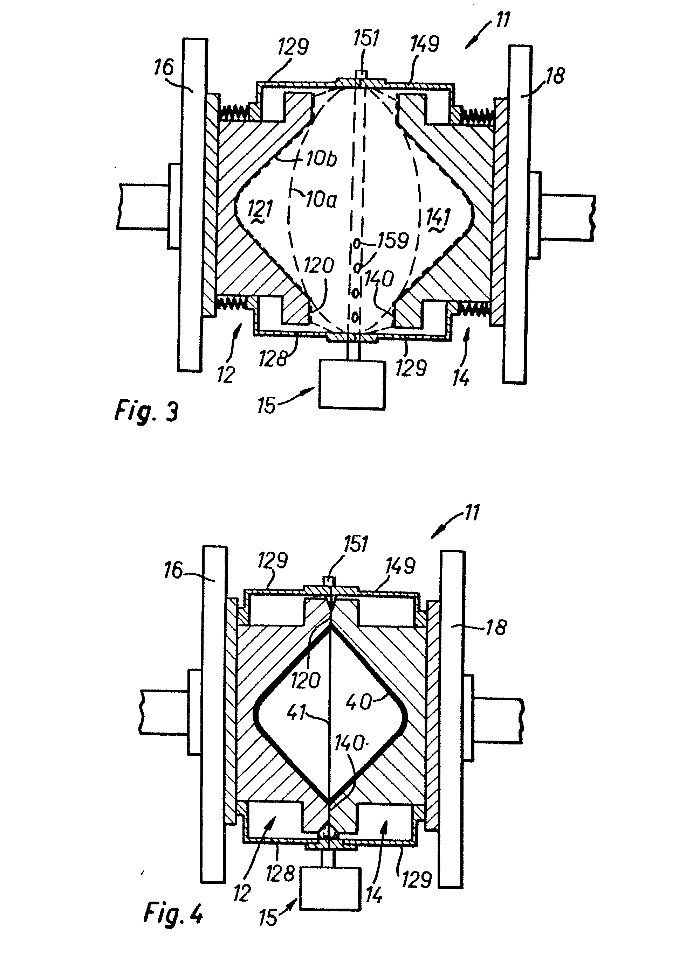

Nach dem Abklemmen des Extrudatschlauches 10 zwischen den Klemmleisten 128, 129; 148, 149 ist die in Fig. 3 dargestellte Position des Hohlformwerkzeuges 11 erreicht. Die Formschlussflächen 120, 140 der Formteile 12, 14 liegen in diesem Zustand noch nicht aneinander, d. h. die Form ist noch offen; durch Einblasen von Druckgas bzw. Pressluft durch die Düse 159 eines Spreizstabes 151 oder beider Spreizstäbe 151, 152 oder/und eine (nicht dargestellte) Zusatzdüse wird der Extrudatschlauch in die Hohlräume 121, 141 hineingedrückt, allgemein über den Zwischenzustand 10a bis zum Anliegen an den Innenwänden der Formteile 12, 14 im Zustand 10b.

Durch weiteres Gegeneinanderbewegen der Pressplatten 16, 18 wird das Hohlformwerkzeug 11 geschlossen und erreicht die in Fig. 4 dargestellte Position.

Das durch Aufblasen in der Position von Fig. 3 im expandierten Extrudatschlauch 10a bzw. 10b eingeschlossene Luftvolumen kann zur Ausformung des Behälters 40 in Fig. 4 ausreichen bzw. gewünschtenfalls durch Hohlnadeleinschuss (nicht dargestellt) oder/und Ansaugen mit Hilfe von (nicht dargestellten) Saugleitungen in den Formteilen ergänzt werden. Das Wandmaterial des Behälters 40 wird durch Kontakt mit den anliegenden und in üblicher (nicht dargestellter) Weise gekühlten Wänden der Formteile 12, 14 zur Verfestigung abgekühlt.

Die Formnaht 41 des fertigen Behälters 40 läuft in der durch die Formschlussflächen 120, 140 definierten Formschlussebene ohne Unterbrechung um den Behälter, so dass dieser im Formnahtbereich glatt auf sich selbst zurückgestülpt werden kann. Auch ist die Innenseite des Behälters 40 im Bereich der Formnaht 41 glatt und frei von Querwülsten, die das glatte Rückstülpen des Behälters behindern würden. Die (nicht dargestellte) Oeffnung des Behälters 40 liegt in bekannter Weise ausserhalb der Formnahtebene.

Zwischen den Formschlussflächen 120, 140 der gemäss Fig. 4 geschlossenen Formteile 12, 14 bleibt meist eine dünne Kunststoffmasseschicht als Formgrat erhalten; dies bietet den Vorteil, dass der Behälter 40 beim Oeffnen des Werkzeuges 11 mit den Spreizstäben 151, 152 über den Formgrat verbunden bleibt und an den Spreizstäbe hängend mit der Spreizeinrichtung 15 aus dem wieder geöffneten Werkzeug 11 entfernt werden kann. Das Entgraten bzw. das Trennen des fertigen Behälters 40 von der Spreizeinrichtung 15 kann dann in einer nachfolgenden Position der aus dem Werkzeug 11 ausgefahrenen Spreizeinrichtung 15 im Karussell erfolgen.

Fig. 5 zeigt eine halbschematische Draufsicht auf eine Spreizeinrichtung 5 in Arbeitsstellung vor dem einen Formteil 54 eines Hohlformwerkzeuges, das durch die Ringschlitzdüse 501 des Kopfes 500 eines (nicht dargestellten) Extruders mit Schlauchextrudat 50 beschickt wird.

Die beiden durchgezeichnet dargestellten Spreizstäbe 51, 52 befinden sich in der ersten Stellung ($A^1 < W$), so dass der Extrudatschlauch 50 unbehindert bis zur gewünschten Länge ($> H^2$) ausgepresst werden kann. Nun werden die Spreizstäbe 51, 52 mit ihren Gleitschuhen 511, 521 auf der Führungsschiene 53 durch Betätigen des pneumatisch oder hydraulisch betätigbaren Zylinders 55 in die durchbrochen gezeichneten Stellungen 51a, 52a bewegt, so dass der Extrudatschlauch 50 über den Formhohlraum 544 ($H^1$, $B^1$) hinweg mindestens soweit durch Spreizen gespannt wird, dass er sich über annähernd die gesamte Breitenabmessung $B^2$ der Formschlussfläche 540 erstreckt; die Länge des gespreizten Extrudatschlauches ist normalerweise etwas grösser, als die Höhenabmessung $H^2$ der Formschlussfläche 540, um das Einklemmen zwischen den (nicht dargestellten) Klemmleisten des Werkzeuges vor dem Blasen zu ermöglichen.

0087828

In der zweiten durchbrochen gezeichneten Stellung 51a, 52a der Spreizstäbe fluchten diese mit beispielsweise im Querschnitt viertelkreisförmigen Ausnehmungen 543, 547 am Aussenrand der Formschlussfläche 540, so dass sie das Schliessen des Werkzeuges nicht behindern. Die Spreizstäbe können aber auch über die Seitenränder der Formschlussfläche 540 hinaus bewegt werden, d. h. die Verwendung von entsprechenden Ausnehmungen 143, 147 (Fig. 2A) bzw. 543, 547 (Fig. 5) ist ein bevorzugtes aber nicht kritisches Merkmal erfindungsgemässer Vorrichtungen.

Das Festklemmen des gespreizten Extrudatschlauches, das Blasen und das Ausformen des Behälters können dann wie oben erläutert durchgeführt werden.

Für die oben erläuterte bevorzugte Verwendung mehrerer Spreizeinrichtungen auf einem Karussell kann jede Spreizeinrichtung 5 der in Fig. 5 dargestellten Art mit Hilfe von verschiebbaren Armen 58, 59 in Arbeitsstellung zwischen den Formteilen des Hohlformwerkzeuges (nur ein Formteil 54 in Fig. 5 dargestellt) gebracht bzw. zusammen mit dem ausgeformten Behälter aus dieser Arbeitsstellung entfernt und in nachfolgende Bearbeitungsstationen des Karussells gebracht werden.

Die Pressluftzuleitungen zu den Spreizstäben 51, 52 von , Fig. 5 sowie die Düsen- bzw. Ausblasöffnungen in diesen sind zur Vereinfachung der Darstellung in Fig. 5 nicht gezeichnet. Allgemein können auch zusätzliche Blasdüsen, z. B. zwischen den Spreizstäben 51, 52, angeordnet werden.

Für den Fachmann ergeben sich aus der obigen Beschreibung zahlreiche Modifikationen im Rahmen der Erfindung.

Patentansprüche

1. Verfahren zur Herstellung von glatt einstülpbaren, annähernd kubischen Kunststoffbehältern aus zwei annähernd symmetrischen, durch eine umlaufende Naht in einer Diagonalebene des Behälters miteinander verbundenen Teilen und mit einer annähernd im Bereich der Naht liegenden Stülplinie durch Verschweissen von zwei vorgeformten Behälterhälften in der die Lage der Naht bestimmenden Diagonalebene, dadurch gekennzeichnet, dass die beiden Behälterhälften gemeinsam aus einem Extrudatschlauch (10) geformt werden, der in warmplastischem Zustand zwischen die Formteile (12, 14) eines geöffneten Hohlformwerkzeuges (11) geführt, mechanisch über die von den Hohlraumhälften (121, 141) in der Formschlussebene (E) der beiden Formteile (12, 14) umgrenzte Fläche ($B^1$, $H^1$) hinweg gespreizt und durch Aufblasen mindestens teilweise in die Hohlraumhälften (121, 141) der Formteile (12, 14) des noch offenen Hohlformwerkzeuges (11) gedrückt wird, worauf das Hohlformwerkzeug (11) zum Verschweissen der Behälterhälften unter Bildung einer in der Formschlussebene (E) ununterbrochen umlaufenden Naht geschlossen wird.

2. Verfahren nach Anspruch 1, dadurch gekennzeichnet, dass zur mechanischen Spreizung des Extrudatschlauches (10) zwei annähernd senkrechte, parallele und gegeneinander bewegliche Spreizstäbe (151, 152) im Innern des Extrudatschlauches (10) verwendet werden, die kühlbar ausgebildet oder/und mit Blasdüsen (159) versehen sind.

Fig. 1

Fig. 2A

Fig. 2B

Fig. 3

Fig. 4

Fig. 5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | DE-B-1 178 580 (KAUTEX) <br> * Insgesamt, insbesondere Spalte 5, Zeilen 5-7; Spalte 6, Zeile 64 - Spalte 7, Zeile 65; Figuren 1-5 * | 1 | B 29 D   23/03 |
| A | FR-A-2 397 932 (BAXTER) <br> * Insgesamt, insbesondere Seite 8; Figur 9 * | 1 | |
| A | US-A-3 672 799 (LIEBERTZ) <br> * Spalte 4, Zeilen 7-32; Figuren 3,4 * | 1 | |
| A | US-A-3 452 391 (LANGECKER) <br> * Spalte 1, Zeilen 43-63; Spalte 3, Zeilen 28-30 * | 1,2 | |
| A | FR-A-1 394 694 (GEBR. BATTENFEL) | | RECHERCHIERTE SACHGEBIETE (Int. Cl. 3) <br><br> B 29 C <br> B 29 D |
| D,A | GB-A-1 226 321 (WILLAMOT) | | |

Der vorliegende Recherchenbericht wurde für alle Patentansprüche erstellt.

| Recherchenort <br> DEN HAAG | Abschlußdatum der Recherche <br> 10-06-1983 | Prüfer <br> WELSCH H.R. |
|---|---|---|